# EUROPÄISCHE PATENTSCHRIFT

(11) **EP 3 047 161 B1**
(45) Veröffentlichungstag und Bekanntmachung des Hinweises auf die Patenterteilung: **03.07.2019**
(21) Anmeldenummer: 14758872.7
(22) Anmeldetag: 02.09.2014
(51) Int. Cl.: F16B 13/06

(54) **SPREIZANKER**
EXPANSION ANCHOR
ANCRE EXTENSIBLE

(30) Priorität: 16.09.2013 EP 13184592
(43) Veröffentlichungstag der Anmeldung: 27.07.2016
(60) Teilanmeldung: 19166806.0
(73) Patentinhaber: Hilti Aktiengesellschaft, 9494 Schaan (LI)
(72) Erfinder: SCHAEFFER, Marc, A-6800 Feldkirch-Nofels (AT)
(74) Vertreter: Hilti Aktiengesellschaft Corporate Intellectual Property
(86) Internationale Anmeldenummer: PCT/EP2014/068586
(87) Internationale Veröffentlichungsnummer: WO 2015/036283

(56) Entgegenhaltungen:
- EP-A2- 0 515 916
- EP-A2- 2 309 138
- WO-A1-2012/139511
- CA-A1- 953 958
- CA-A2- 1 240 162
- DE-A1- 2 256 822
- DE-A1- 3 411 285
- DE-A1- 4 005 610
- DE-U1-202010 008 775

## Beschreibung

Die Erfindung betrifft einen Spreizanker gemäss dem Oberbegriff des Anspruchs 1. Ein solcher Spreizanker ist ausgestattet mit einem Bolzen, der einen Halsbereich und einen an den Halsbereich anschliessenden Spreizbereich aufweist, in welchem sich der Bolzen zum Halsbereich hin verjüngt, wobei der Bolzen im Halsbereich eine Nut aufweist, die sich längs des Bolzens erstreckt, und mit einer Spreizhülse, welche den Bolzen zumindest teilweise umgibt, und welche auf ihrer Innenseite einen Steg aufweist, wobei der Steg zumindest bereichsweise in die Nut im Halsbereich eingreift, und wobei durch den Steg die Wandstärke der Spreizhülse lokal erhöht ist, wobei die Spreizhülse unter radialem Aufweiten der Spreizhülse längs des Bolzens aus dem Halsbereich in den Spreizbereich verschiebbar ist, wobei der Steg beim Verschieben der Spreizhülse aus dem Halsbereich in den Spreizbereich zumindest bereichsweise in den Spreizbereich gelangt und vom Spreizbereich radial nach aussen gedrängt wird.

Spreizanker sind beispielsweise aus der DE 101 08 844 A1 bekannt. Sie werden in ein Bohrloch in einem Substrat, z. B. in einer Wand oder einer Decke eines Bauteils, eingesetzt. Durch Einziehen des Spreizbereichs des Bolzens in die Spreizhülse wird diese radial aufgeweitet und der Spreizanker im Untergrund verankert. Üblicherweise weisen die Bolzen solcher Spreizanker einen im wesentlichen kreisförmigen Querschnitt auf.

Aus der EP 2 309 138 A2 ist ein Spreizanker bekannt, bei dem der Spreizbereich parallel zur Längsachse verlaufende Kanten aufweist. Die EP 0 515 916 A2 und die DE 2 256 8 22 A1 beschreiben Spreizanker, bei denen durch eine Nutenführung eine Verdrehsicherung der Spreizhülse am Bolzen gebildet ist.

Die DE 34 11 285 A1 zeigt eine Schraubverbindungseinrichtung mit einem Gewindebolzen und einem Gewindeeinsatz mit einem Aussengewinde, wobei der Gewindeeinsatz in eine Gewindebohrung eingebracht wird. Der Gewindeeinsatz weist durch Längsschlitze gebildete Sperrarme auf, die bei der Montage vom Gewindebolzen auseinander gespreizt werden und an das Gewinde der Gewindebohrung angedrückt werden, wodurch eine Erhöhung des Reibschlusses am Gewindeeinsatz bewirkt werden soll. Nach der DE 34 11 285 A1 kann vorgesehen sein, dass ein Formschluss zwischen dem Gewindebolzen und dem Gewindeeinsatz über zueinander korrespondierende Keile und Nute gebildet wird.

Aufgabe der Erfindung ist es, einen Spreizanker anzugeben, der bei einem geringen Herstellungsaufwand und hoher Zuverlässigkeit besonders gute Lastwerte erreicht.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass der Bolzen im Spreizbereich in der Verlängerung der Nut zumindest bereichsweise eine grössere Steigung aufweist als versetzt zur Nut, oder dass der Bolzen im Spreizbereich in der Verlängerung der Nut zumindest bereichsweise eine kleinere Steigung aufweist als versetzt zur Nut.

Beim erfindungsgemässen Spreizanker ist unter anderem vorgesehen, dass der Steg beim Verschieben der Spreizhülse aus dem Halsbereich in den Spreizbereich zumindest bereichsweise in den Spreizbereich gelangt und vom Spreizbereich radial nach aussen gedrängt wird.

Ausgangspunkt der Erfindung ist ein Dilemma, das die Lastwerte bei herkömmlichen Spreizankern mit kreisförmigem Bolzenquerschnitt begrenzen kann. So ist einerseits für eine gute Verankerung an der Bohrlochwand häufig eine möglichst grosse Hülsendicke erwünscht, da mit zunehmender Hülsendicke die maximale radiale Ausdehnung der aufgespreizten Hülse gesteigert werden kann und somit die Verankerung an der Bohrlochwand verbessert werden kann. Andererseits muss die Hülse aber im unverspreizten Zustand im Halsbereich aufgenommen werden. Wird nun im Hinblick auf eine gute Verankerung eine grosse Hülsendicke gewählt, so muss der Durchmesser des Bolzens im Halsbereich entsprechend reduziert werden, um die Hülse aufnehmen zu können, was mit einer entsprechenden Verringerung der Bruchlast des Bolzens einhergehen kann. Obwohl es also für eine Verbesserung der Auszugswerte vorteilhaft wäre, die Hülsendicke zu erhöhen, ist dies bei Ankern des Standes der Technik häufig nicht möglich, ohne den Bolzen zu schwächen, so dass die Traglast des Gesamtsystems durch Erhöhung der Hülsendicke nicht beliebig gesteigert werden kann.

Hier setzt das vorliegende Konzept an und schlägt vor, an der Hülse zumindest einen ins Hülseninnere vorstehenden und eine lokale Wandstärkeerhöhung bildenden Steg und im Halsbereich des Bolzens eine korrespondierende Nut vorzusehen, die den Steg im unverspreizten Zustand zumindest teilweise aufnimmt. Im Gegensatz zu den Ankern der EP 0 515 916 A2, bei denen die Stege lediglich als Verdrehsicherung dienen, ist beim vorliegenden Spreizanker der Steg so angeordnet ist, dass er beim bestimmungsgemässen Gebrauch des Ankers auf eine Schrägfläche im Spreizbereich aufläuft und radial nach aussen gedrängt wird. Da die Wanddicke am Steg lokal erhöht ist, kann hierbei eine besonders grosse maximale radiale Ausdehnung der aufgespreizten Hülse und somit eine besonders gute Verankerung erreicht werden. Zugleich wird jedoch der Bolzen in seinem Halsbereich nicht wesentlich geschwächt, da die Wanddickenerhöhung auf den Steg begrenzt ist, so dass zur Aufnahme der Wanddickenerhöhung eine schmale Nut im Halsbereich ausreichend ist. Im Gegensatz zum zuvor genannten Stand der Technik kann somit eine besonders weite Verspreizung erzielt werden, ohne den Bolzen wesentlich zu schwächen. Es können somit besonders gute Lastwerte erzielt werden. Das oben beschriebene scheinbare Dilemma kann aufgelöst werden.

Im Halsbereich weist der Bolzen bevorzugt einen in Längsrichtung zumindest bereichsweise konstanten Querschnitt auf. Im Spreizbereich weitet sich der Bolzen zu seiner Spitze hin, das heisst mit zunehmendem Abstand vom Halsbereich, auf. Dies kann insbesondere beinhalten, dass der Umkreisdurchmesser des Querschnitts des Bolzens, der Inkreisdurchmesser des Querschnitts des Bolzens und/oder seine Querschnittsfläche mit zunehmendem Abstand vom Halsbereich grösser wird. Die Nut und/oder der Steg verläuft vorzugsweise parallel zur Längsachse des Bolzens und/oder des Spreizankers. Soweit hier von der Radialrichtung und der Längsrichtung die Rede ist, soll sich dies insbesondere auf die Längsachse des Bolzens und/oder Ankers beziehen, die insbesondere die Symmetrie- und/oder Mittelachse des Bolzens beziehungsweise des Ankers sein kann. Unter einer lokalen Wandstärkeerhöhung kann vorzugsweise verstanden werden, dass die Wandstärke am Steg grösser ist als in seiner Umgebung.

Die Spreizhülse und der Bolzen bestehen bevorzugt aus einem Metallmaterial. Vorzugsweise weist der Bolzen an seinem dem Spreizbereich entgegengesetzten Endbereich ein Aussengewinde für eine Mutter auf. Insbesondere kann am Bolzen ein Anschlag, beispielsweise eine Ringschulter, ausgebildet sein, der eine Verschiebung der Hülse vom Spreizbereich hinweg begrenzt. Die Spreizhülse, die auch mehrteilig ausgeführt sein kann, kann aber auch bis zum Aussengewinde des Bolzens reichen. Der Spreizbereich ist zum Aufspreizen der Spreizhülse, das heisst zum radialen Aufweiten der Spreizhülse vorgesehen.

Der in die Nut am Bolzen eingreifende Steg kann auch eine Verdrehsicherung bilden, die eine Verdrehung der Spreizhülse relativ zum Bolzen um die Längsachse des Bolzens herum hemmt. Grundsätzlich könnte der Steg Unterbrechungen aufweisen. Bevorzugt ist der Steg aber durchgehend.

Damit der Steg zuverlässig aktiviert, also mit der umgebenden Bohrlochwand lastabtragend verpresst wird, sollte der Steg in der Regel möglichst weit zur vorderen Stirnseite der Spreizhülse reichen, also zu der Stirnseite, die dem Spreizbereich zugewandt ist. Besonders bevorzugt ist es daher, dass der Abstand des Steges von der Stirnseite der Spreizhülse, welche dem Spreizbereich zugewandt ist, kleiner ist als das 10-fache, 5-fache, 2-fache, 1-fache oder als die Hälfte der Höhe des Steges. Alternativ oder zusätzlich kann aus demselben Grunde vorgesehen sein, dass der Abstand des Steges von der Stirnseite der Spreizhülse, welche dem Spreizbereich zugewandt ist, kleiner ist als die in Längsrichtung gemessene Länge des kürzesten Spreizschlitzes der Spreizhülse, und dass der Abstand insbesondere kleiner ist als das 0.5-fache, das 0.25-fache oder das 0.1-fache dieser Länge. Alternativ oder zusätzlich kann aus demselben Grunde vorgesehen sein, dass der Steg in das vordere Drittel oder das vordere Viertel der Spreizhülse reicht. Unter der Höhe des Steges kann insbesondere die maximale Wandstärkendifferenz der Spreizhülse zwischen dem Steg und seiner Umgebung verstanden werden.

Eine weitere vorteilhafte Ausgestaltung der Erfindung liegt darin, dass die im Halsbereich des Bolzens vorgesehene Nut bis zum Spreizbereich des Bolzens reicht. Bei dieser Ausgestaltung muss der relativ steife Steg nicht vorzeitig aufgebogen werden, und die Spreizhülse kann zu Beginn des Ankersetzvorgangs besonders zuverlässig an der umgebenden Bohrlochwand greifen. Die im Halsbereich des Bolzens vorgesehene Nut kann auch in den Spreizbereich des Bolzens reichen, was das Spreizverhalten, insbesondere zu Beginn des Ankersetzvorgangs, noch weiter verbessern kann.

Besonders zweckmässig ist es, dass der Bolzen im Halsbereich eine Vielzahl von Nuten aufweist, die sich längs des Bolzens erstrecken, und dass die Spreizhülse auf ihrer Innenseite eine Vielzahl von Stegen aufweist, durch welche die Wandstärke der Spreizhülse jeweils lokal erhöht ist, und welche jeweils zumindest bereichsweise in eine der Nuten im Halsbereich eingreifen. Vorzugsweise gelangen beim Verschieben der Spreizhülse aus dem Halsbereich in den Spreizbereich mehrere der Stege, insbesondere alle Stege, zumindest bereichsweise in den Spreizbereich und werden vom Spreizbereich radial nach aussen gedrängt. Bei dieser Ausführungsform können also mehrere Stege in der oben genannten Art und Weise wirken, so dass die maximale radiale Ausdehnung der Hülse noch weiter verbessert werden kann, ohne den Halsbereich des Bolzens wesentlich zu schwächen. Geeigneterweise entspricht die Zahl der Nuten im Halsbereich der Zahl der Stege an der Hülse.

Sofern mehrere erfindungsgemässe Nuten vorhanden sind, können die in dieser Anmeldung beschriebenen Merkmale bei einer einzigen Nut, bei mehreren dieser Nuten oder bei allen dieser Nuten realisiert sein. Zusätzlich oder alternativ können, sofern mehrere erfindungsgemässe Stege vorhanden sind, die in dieser Anmeldung beschriebenen Merkmale bei einem einzigen Steg, bei mehreren dieser Stege oder bei allen dieser Stege realisiert sein.

Insbesondere kann der Bolzen im Spreizbereich zumindest abschnittsweise einen unrunden Querschnitt, also insbesondere einen Querschnitt, der von einer Kreisform abweicht, aufweisen. Dieses Merkmal kann berücksichtigen, dass die Spreizhülse aufgrund des Steges an ihrer Innenseite ebenfalls einen unrunden Querschnitt aufweist. Durch einen unrunden Querschnitt im Spreizbereich kann das Spreizverhalten der innenseitig unrunden Spreizhülse gezielt beeinflusst und verbessert werden.

Erfindungsgemäss kann vorgesehen sein, dass der Bolzen im Spreizbereich in der Verlängerung der Nut zumindest bereichsweise eine grössere Steigung aufweist als versetzt zur Nut, insbesondere in Umfangsrichtung versetzt zur Nut. Vorzugsweise steigt also der Spreizbereich in der Verlängerung der Nut des Halsbereichs steiler in Radialrichtung an als versetzt zur Nut, das heisst der vom Halsbereich aus betrachtete Öffnungswinkel ist in der Verlängerung der Nut zumindest bereichsweise grösser als in Umfangsrichtung versetzt zur Nut. Gemäss dieser Ausgestaltung wird die durch den Steg gebildete Wandstärkenerhöhung auch besonders stark aufgespreizt, so dass ein besonders hohes Aufspreizmass erhalten werden kann. Versetzt zu der Nut kann die Steigung der Mantelfläche des Bolzens auch negativ sein, was die Herstellung vereinfachen kann. Soweit hier von der Steigung die Rede ist, kann sich diese insbesondere auf die Längsachse des Bolzens als Abszisse und auf eine senkrecht zur Längsachse durch den Halsbereich, insbesondere durch die Nut, verlaufende Achse als Ordinate beziehen, dass heisst bei einer positiven Steigung nimmt der Abstand der Mantelfläche des Bolzens von der Längsachse mit zunehmendem Abstand vom Halsbereich zu, und bei einer negativen Steigung nimmt der Abstand der Mantelfläche des Bolzens von der Längsachse mit zunehmendem Abstand vom Halsbereich ab.

Alternativ oder zusätzlich kann der Bolzen erfindungsgemäss im Spreizbereich in der Verlängerung der Nut zumindest bereichsweise eine kleinere Steigung aufweisen als versetzt zur Nut. Hierdurch kann beispielsweise das Aufspreizen des relativ steifen Steges verzögert werden, und die Spreizhülse kann zu Beginn des Ankersetzvorgangs besonders zuverlässig an der umgebenden Bohrlochwand greifen.

Eine weitere bevorzugte Weiterbildung der Erfindung liegt darin, dass der Bolzen im Halsbereich, insbesondere im Bereich der zumindest einen Nut, und/oder im Spreizbereich zumindest abschnittsweise einen drehsymmetrischen Querschnitt aufweist. Unter einer Drehsymmetrie kann insbesondere verstanden werden, dass eine Drehung des Bolzens um einen gewissen Winkel um seine Längsachse den Bolzen wieder mit sich selbst zur Deckung bringt. Die Spreizhülse kann ebenfalls einen drehsymmetrischen Querschnitt aufweisen, von dem allenfalls durch gegebenenfalls vorhandene Spreizschlitze in der Hülse abgewichen wird. Bei einem drehsymmetrischen Querschnitt können die Zugkräfte besonders gleichmässig vom Bolzen aufgenommen werden, so dass mit besonders geringem Materialaufwand besonders hohe Lastwerte erzielt werden können.

Zweckmässigerweise schliesst sich die Mantelfläche des Bolzens im Spreizbereich stetig an die Mantelfläche des Bolzens im Halsbereich an. Gemäss dieser Ausgestaltung ist ein stufenloser Übergang zwischen Halsbereich und Spreizbereich gegeben. Dies kann das Spreizverhalten noch weiter verbessern, insbesondere zu Beginn des Ankersetzvorgangs.

Eine weitere vorteilhafte Ausgestaltung der Erfindung besteht darin, dass der Steg an seinem dem Spreizbereich zugewandten Ende eine Fase aufweist. Hierdurch kann unter anderem der relativ steife Steg einlaufseitig biegsamer gemacht werden, und die Spreizhülse kann zu Beginn des Ankersetzvorgangs besonders zuverlässig an der umgebenden Bohrlochwand greifen.

Weiterhin kann vorgesehen werden, dass der Bolzen in einer Vertiefung, insbesondere in der Nut, eine Klebstoffbeschichtung aufweist, die von der Spreizhülse, insbesondere vom Steg, aktivierbar ist. Beispielsweise kann der in der Vertiefung vorgesehene Klebstoff mikroverkapselt sein, so dass er durch Druck, der von der Spreizhülse ausgeübt wird, aktiviert wird. Alternativ kann an der Spreizhülse auch eine Substanz vorgesehen sein, die den Klebstoff chemisch aktiviert. Der Klebstoff kann die Hülse im gespreizten Zustand am Bolzen sichern, so dass eine besonders tragfähige Verbindung gegeben sein kann. Aufgrund der Anordnung in einer Vertiefung ist der Klebstoff darüber hinaus besonders gut gegen eine vorzeitigen Aktivierung oder Abreiben geschützt, so dass eine besonders hohe Zuverlässigkeit gegeben ist. Die Vertiefung mit dem Klebstoff kann grundsätzlich sowohl im Halsbereich als auch im Kopfbereich vorgesehen werden. Besonders bevorzugt ist die fragliche Vertiefung aber durch die Nut im Halsbereich gebildet, welche den Steg aufnimmt. Da in diesem Fall die Nut eine Mehrfachfunktion erfüllt, ist der Herstellungsaufwand besonders gering.

Zusätzlich oder alternativ kann vorgesehen sein, dass die Hülse in einer Vertiefung eine Klebstoffbeschichtung aufweist, die vom Bolzen aktivierbar ist.

Die Erfindung betrifft auch ein Herstellungsverfahren, bei dem ein erfindungsgemässer Spreizanker gefertigt wird, bei dem aus einem ersten Rohling der Bolzen des Spreizankers geformt wird, und aus einem zweiten Rohling die Spreizhülse des Spreizankers geformt wird. Der erste Rohling kann ein Drahtstück sein, an dem der Spreizbereich zum Beispiel durch Stauchen oder Walzen angeformt wird. Der zweite Rohling kann eine Blechtafel sein, die zur Hülse gebogen wird.

Besonders bevorzugt ist es, dass der Steg auf der Innenseite der Spreizhülse in einem Walzprozess geformt wird. In diesem Walzprozess können auch andere funktionale Elemente der Hülse, wie aussenseitige Vorsprünge oder endnahe Abstufungen, angeformt werden. Vorzugsweise verläuft die Drehachse zumindest einer im Walzprozess verwendeten Formwalze parallel, zumindest unter einem Winkel kleiner 45°, zum Steg.

Weiterhin kann vorgesehen sein, dass auf den erste Rohling nach dem Formen der Nut eine Beschichtungsflüssigkeit aufgebracht wird, und der erste Rohling sodann um seine Längsachse in Drehung versetzt wird, so dass sich die Beschichtungsflüssigkeit ausserhalb der Nut anreichert und dort mit lokal erhöhter Schichtdicke aushärtet. Gemäss dieser Ausführungsform wird der erfindungsgemäss spezielle Bolzenquerschnitt im Zusammenhang mit einem Rotations-Beschichtungsverfahren dafür eingesetzt, eine gezielt inhomogene Beschichtung zu erzeugen, wodurch eine zusätzlich Funktionalität erhalten werden kann.

Die Erfindung betrifft auch eine Anordnung bestehend aus einem Substrat mit einem Loch und einem erfindungsgemässen Spreizanker, der im Loch angeordnet ist, wobei der Spreizbereich des Bolzens die Spreizhülse an ihrem Steg gegen die Wand des Lochs presst. Demgemäss ist der Spreizanker im Loch verankert, wobei die Spreizhülse am Steg aktiviert ist, das heisst die Spreizhülse ist unmittelbar am Steg mit der Lochwand verpresst. Das Substrat kann insbesondere ein Betonsubstrat sein.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine grob schematische, teilweise längsgeschnittene Ansicht eines in einem Betonsubstrat gesetzten erfindungsgemässen Spreizankers;
- Figur 2:: eine Seitenansicht des Bolzens des Spreizankers aus Figur 1;
- Figur 3:: eine Querschnittsansicht A-A gemäss Figur 2 durch den Bolzen des Spreizankers mit der Spreizhülse aus Figur 7 im aufgespreizten Zustand;
- Figur 4:: eine Querschnittsansicht B-B gemäss Figur 2 durch den Bolzen des Spreizankers mit der Spreizhülse aus Figur 7 im aufgespreizten Zustand;
- Figur 5:: eine Querschnittsansicht C-C gemäss Figur 2 durch den Bolzen des Spreizankers mit der Spreizhülse aus Figur 7 im aufgespreizten Zustand;
- Figur 6:: eine perspektivische Ansicht des Spitzenbereichs des Bolzens aus Figur 2;
- Figur 7:: eine perspektivische Ansicht einer zum Bolzen der Figur 2 korrespondierenden Spreizhülse des Spreizankers aus Figur 1;
- Figur 8:: eine Ansicht der Spreizhülse aus Figur 7 von vorne;
- Figur 9:: eine Ansicht der Spreizhülse aus Figur 7 von der Seite;
- Figur 10:: eine Ansicht der Spreizhülse aus Figur 7 von hinten; und
- Figur 11:: eine Längsschnittansicht A-A gemäss Figur 8 durch die Spreizhülse.

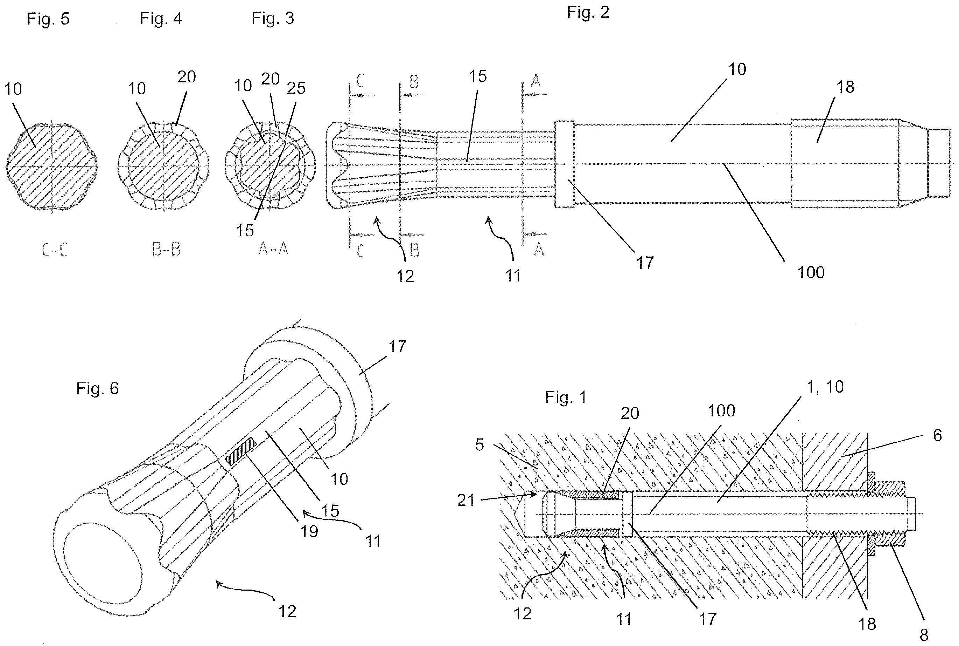

Die Figuren zeigen ein Ausführungsbeispiel eines Spreizankers 1 gemäss der Erfindung. Wie insbesondere Figur 1 zeigt, weist der Spreizanker 1 einen Bolzen 10 und eine Spreizhülse 20 auf, die den Bolzen 10 umgibt. Der Bolzen 10 weist einen Halsbereich 11 mit im wesentlichen konstanten Querschnitt und im Anschluss an den Halsbereich 11 im vorderen Endbereich des Bolzens 10 einen Spreizbereich 12 für die Spreizhülse 20 auf, in welchem sich der Bolzen 10 ausgehend vom Halsbereich 11 zu seinem vorderen Ende hin aufweitet. Auf der dem Spreizbereich 12 abgewandten Seite des Halsbereichs 11 weist der Bolzen 10 einen beispielsweise als als Ringschulter ausgebildeten Anschlag 17 für die Spreizhülse 20 auf. An seinem dem Spreizbereich 12 entgegengesetzten hinteren Endbereich ist der Bolzen 10 mit einem Aussengewinde 18 für eine Mutter 8 versehen.

Beim Setzen des Spreizankers 1 wird der Bolzen 10 mit dem Spreizbereich 12 voran in Richtung der Längsachse 100 des Bolzens 10 in ein Bohrloch im Substrat 5 aus Figur 1 geschoben. Aufgrund des Anschlags 17 wird dabei auch die Spreizhülse 20 in das Loch eingebracht. Sodann wird der Bolzen 10, beispielsweise durch Anziehen der Mutter 8, wieder ein Stück weit aus dem Bohrloch herausgezogen. Aufgrund ihrer Reibung mit der Bohrlochwand bleibt die Spreizhülse 20 dabei zurück und es kommt zu einer Verschiebung des Bolzens 10 relativ zur Spreizhülse 20, bei der der Spreizbereich 12 des Bolzens 10 immer tiefer so in die Spreizhülse 20 eindringt, dass die Spreizhülse 20 vom Spreizbereich 12 des Bolzens 10 radial aufgeweitet und mit der Wand des Bohrlochs verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1, aber auch in den Figuren 3 bis 5 gezeigt. Mittels der Mutter 8 kann ein Anbauteil 6 am Substrat 5 festgelegt werden.

Wie insbesondere die Figuren 2, 3 und 6 zeigen, weist der Bolzen 10 in seinem Halsbereich 11 eine Vielzahl von Nuten 15 auf, im dargestellten Ausführungsbeispiel sechs Nuten 15. Diese Nuten 15 erstrecken sich parallel zueinander und parallel zur Längsachse 100 des Bolzens 10, vorzugsweise ausgehend vom Anschlag 17, bis hin zum Spreizbereich 12. Im Querschnitt (Figur 3) weist der Bolzen 10 im Halsbereich 11 eine unrunde Form, vorzugsweise eine Wellenform auf, wobei die Wellentäler durch die Nuten 15 gebildet werden. Die Flanken der Nuten 15 verlaufen im Querschnitt des Bolzens 10 vorzugsweise stetig. Grundsätzlich könnten die Flanken der Nuten 15 aber auch eine Stufenform bilden.

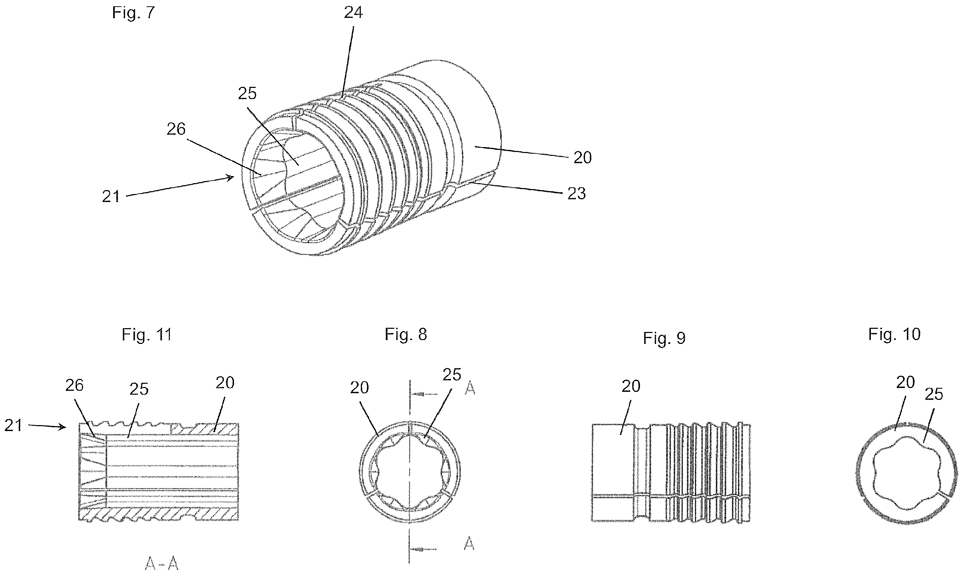

Wie insbesondere die Figuren 7, 8, 10 und 11 zeigen, weist die Spreizhülse 20 auf ihrer Innenseite eine Vielzahl von Stegen 25 auf, im dargestellten Ausführungsbeispiel sechs Stege 25. Die Zahl der Stege 25 auf der Innenseite der Spreizhülse 20 entspricht vorzugsweise der Zahl der Nuten 15 im Halsbereich 11 des Bolzens 10 oder ist kleiner als die Zahl der Nuten 15. Die Stege 25 erstrecken sich parallel zueinander und parallel zur Längsachse 100 des Bolzens. Im Querschnitt (Figuren 3 bis 5 und 8) weist die Spreizhülse 20 vorzugsweise eine innenseitige Wellenform auf, wobei die Wellenberge durch die Stege 25 gebildet werden. Die Flanken der Stege 25 im Querschnitt der Spreizhülse 20 verlaufen vorzugsweise stetig. Grundsätzlich könnten die Flanken der Stege 25 aber auch eine Stufenform bilden. An den Stegen 25 weist die Spreizhülse 20 eine grössere Wandstärke auf als in Umfangsrichtung versetzt zu den Stegen 25, wie beispielsweise in den Figuren 3 und 8 erkennbar ist.

Wie insbesondere die Querschnittsansicht der Figur 3 zeigt, greifen die Stege 25 der Spreizhülse 20 in die Nuten 15 im Halsbereich 11 des Bolzens 10 ein. Die Stege 25 reichen bis zur vorderen Stirnseite 21 der Spreizhülse 20, also bis zu derjenigen Stirnseite, die dem Spreizbereich 12 des Bolzens 10 zugewandt und dem Anschlag 17 abgewandt ist.

Im Spreizbereich 12 des Bolzens 10 nimmt der Umkreis des Bolzens 10 um die Längsachse 100 mit zunehmendem Abstand vom Halsbereich 11 zu (siehe Figuren 2 bis 5). Der Öffnungswinkel des Bolzens 10 im Spreizbereich 12 variiert jedoch in Umfangsrichtung des Bolzens 10, wie es insbesondere in den Figuren 2 und 6 erkennbar ist. In der Ausführungsform der Figuren 2 und 6 ist die Steigung des Bolzens 10 im Spreizbereich 12 in der Verlängerung der Nuten 15 grösser als versetzt zu den Nuten 15. Grundsätzlich sind aber auch Ausführungsvarianten denkbar, bei denen die Steigung des Bolzens 10 im Spreizbereich 12 in der Verlängerung der Nuten 15 kleiner ist als versetzt zu den Nuten 15.

Ebenso wie der Halsbereich 11 weist auch der Spreizbereich 12 des Bolzens 10 im Querschnitt (zum Beispiel Figur 5) eine unrunde Form, vorzugsweise eine Wellenform auf. Da sich jedoch der Spreizbereich 12 stetig an den Halsbereich 11 anschliesst, und da die Steigung in der Verlängerung der Nuten 15 grösser ist als versetzt hierzu, weist der Bolzen 10 in einer bevorzugten Querschnittsebene des Spreizbereichs 12, die in Figur 4 gezeigt ist, einen kreisförmigen Querschnitt auf.

Im unverspreizten Zustand der Spreizhülse 20, der beim Einführen des Bolzens 10 in das Substrat 5 vorliegt, sind die lokalen Wandstärkeerhöhungen der Spreizhülse 20, die durch die Stege 25 gebildet werden, zumindest teilweise in den Nuten 15 im Bolzen 10 aufgenommen, so dass die Wandstärkeerhöhungen der Spreizhülse 20, die durch die Stege 25 gebildet werden, nicht oder allenfalls nur teilweise radial nach aussen vorstehen. Beim Aufspreizen der Spreizhülse 20, wenn die Spreizhülse 20 also in den Spreizbereich 12 gelangt und von diesem radial aufgeweitet wird, werden die Stege 25 aktiviert und treten an der Aussenseite der Spreizhülse 20 hervor, wie es beispielsweise in Figur 4 erkennbar ist.

Wie insbesondere die Figuren 7 und 11 zeigen, weisen die Stege 25 im Bereich der vorderen Stirnseite 21 der Spreizhülse 20 jeweils eine Fase 26 auf. An dieser Fase 26 nimmt die Wandstärke der Spreizhülse 20 zur vorderen Stirnseite 21 hin, vorzugsweise kontinuierlich, ab.

Wie insbesondere in Figur 7 erkennbar ist, weist die Spreizhülse 20 Spreizschlitze 24 auf, die von der vorderen Stirnseite 21 der Spreizhülse 20 ausgehen. Diese Spreizschlitze 23 und 24 erleichtern das radiale Aufweiten der Spreizhülse 20 durch den Spreizbereich 12 des Bolzens 10. Die Spreizhülse 20 kann durch Aufrollen einer Blechplatine gefertigt werden.

Wie in Figur 6 gezeigt ist, kann der Bolzen 10 in zumindest einer der Nuten 15, vorzugsweise am Übergang zum Spreizbereich 12, eine Klebstoffbeschichtung 19 aufweisen, welche vom korrespondierenden Steg 25 der Spreizhülse 20 beim Setzen des Ankers aktiviert wird, und welche die Spreizhülse 20 am Bolzen 10 fixieren kann.

## Patentansprüche

1. Spreizanker (1)
mit einem Bolzen (10), der einen Halsbereich (11) und einen an den Halsbereich (11) anschliessenden Spreizbereich (12) aufweist, in welchem sich der Bolzen (10) zum Halsbereich (11) hin verjüngt, wobei der Bolzen (10) im Halsbereich (11) eine Nut (15) aufweist, die sich längs des Bolzens (10) erstreckt,
und mit einer Spreizhülse (20), welche den Bolzen (10) zumindest teilweise umgibt, und welche auf ihrer Innenseite einen Steg (25) aufweist, wobei der Steg (25) zumindest bereichsweise in die Nut (15) im Halsbereich (11) eingreift, und wobei durch den Steg (25) die Wandstärke der Spreizhülse (20) lokal erhöht ist,
wobei die Spreizhülse (20) unter radialem Aufweiten der Spreizhülse (20) längs des Bolzens (10) aus dem Halsbereich (11) in den Spreizbereich (12) verschiebbar ist, wobei der Steg (25) beim Verschieben der Spreizhülse (20) aus dem Halsbereich (11) in den Spreizbereich (12) zumindest bereichsweise in den Spreizbereich (12) gelangt und vom Spreizbereich (12) radial nach aussen gedrängt wird,
**dadurch gekennzeichnet,**
**dass** der Bolzen (10) im Spreizbereich (12) in der Verlängerung der Nut (15) zumindest bereichsweise eine grössere Steigung aufweist als versetzt zur Nut (15), oder
**dass** der Bolzen (10) im Spreizbereich (12) in der Verlängerung der Nut (15) zumindest bereichsweise eine kleinere Steigung aufweist als versetzt zur Nut (15).

2. Spreizanker (1) nach Anspruch 1,
**dadurch gekennzeichnet,**
**dass** der Abstand des Steges (25) von der Stirnseite (21) der Spreizhülse (20), welche dem Spreizbereich (12) zugewandt ist, kleiner ist als das 10-fache, 5-fache oder 2-fache der Höhe des Steges (25).

3. Spreizanker (1) nach einem der vorstehenden Ansprüche,
**dadurch gekennzeichnet,**
**dass** die im Halsbereich (11) des Bolzens (10) vorgesehene Nut (15) bis zum Spreizbereich (12) des Bolzens (10) reicht.

4. Spreizanker (1) nach einem der vorstehenden Ansprüche,
**dadurch gekennzeichnet,**
**dass** der Bolzen (10) im Halsbereich (11) eine Vielzahl von Nuten (15) aufweist, die sich längs des Bolzens (10) erstrecken,
**dass** die Spreizhülse (20) auf ihrer Innenseite eine Vielzahl von Stegen (25) aufweist, durch welche die Wandstärke der Spreizhülse (20) jeweils lokal erhöht ist, und welche jeweils zumindest bereichsweise in eine der Nuten (15) im Halsbereich (11) eingreifen, und dass mehrere Stege (25) beim Verschieben der Spreizhülse (20) aus dem Halsbereich (11) in den Spreizbereich (12) zumindest bereichsweise in den Spreizbereich (12) gelangen und vom Spreizbereich (12) radial nach aussen gedrängt werden.

5. Spreizanker (1) nach einem der vorstehenden Ansprüche,
**dadurch gekennzeichnet,**
**dass** der Bolzen (10) im Spreizbereich (12) zumindest abschnittsweise einen unrunden Querschnitt aufweist.

6. Spreizanker (1) nach einem der vorstehenden Ansprüche,
**dadurch gekennzeichnet,**
**dass** der Bolzen (10) im Halsbereich (11) und/oder im Spreizbereich (12) zumindest abschnittsweise einen drehsymmetrischen Querschnitt aufweist.

7. Spreizanker (1) nach einem der vorstehenden Ansprüche,
**dadurch gekennzeichnet,**
**dass** sich die Mantelfläche des Bolzens (10) im Spreizbereich (12) stetig an die Mantelfläche des Bolzens (10) im Halsbereich (11) anschliesst.

8. Spreizanker (1) nach einem der vorstehenden Ansprüche,
**dadurch gekennzeichnet,**
**dass** der Steg (25) an seinem dem Spreizbereich (12) zugewandten Ende eine Fase (26) aufweist.

9. Spreizanker (1) nach einem der vorstehenden Ansprüche,
**dadurch gekennzeichnet,**
**dass** der Bolzen (10) in einer Vertiefung, insbesondere in der Nut (15), eine Klebstoffbeschichtung (19) aufweist, die von der Spreizhülse (20), insbesondere vom Steg (25), aktivierbar ist.

10. Herstellungsverfahren, bei dem ein Spreizanker (1) nach einem der vorstehenden Ansprüche gefertigt wird, bei dem
aus einem ersten Rohling der Bolzen (10) des Spreizankers (1) geformt wird, und
aus einem zweiten Rohling die Spreizhülse (20) des Spreizankers (1) geformt wird, wobei der Bolzen (10) die Merkmale des Bolzens (10) beziehungsweise die Spreizhülse (20) die Merkmale der Spreizhülse (20) des Spreizankers (1) nach einem der vorstehenden Ansprüche aufweist.

11. Verfahren nach Anspruch 10,
**dadurch gekennzeichnet,**
**dass** der Steg (25) auf der Innenseite der Spreizhülse (20) in einem Walzprozess geformt wird, wobei die Drehachse zumindest einer im Walzprozess verwendeten Formwalze vorzugsweise parallel, zumindest unter einem Winkel kleiner 45° zum Steg (25) verläuft.

12. Verfahren nach Anspruch 10 oder 11,
**dadurch gekennzeichnet,**
**dass** auf den ersten Rohling nach dem Formen der Nut (15) eine Beschichtungsflüssigkeit aufgebracht wird, und der erste Rohling sodann um seine Längsachse in Drehung versetzt wird, so dass sich die Beschichtungsflüssigkeit ausserhalb der Nut (15) anreichert und dort mit lokal erhöhter Schichtdicke aushärtet.

13. Anordnung bestehend aus einem Substrat (5) mit einem Loch und einem Spreizanker (1) nach einem der Ansprüche 1 bis 9, der im Loch angeordnet ist, wobei der Spreizbereich (12) des Bolzens (10) die Spreizhülse (20) an ihrem Steg (25) gegen die Wand des Lochs presst.

## Claims

1. Expansion anchor (1),
comprising a bolt (10) having a neck region (11) and an expansion region (12) adjoining the neck region (11) in which the bolt (10) tapers towards the neck region (11), the bolt (10) being provided in the neck region (11) with a groove (15) extending along the bolt (10),
and comprising an expansion sleeve (20) at least partially surrounding the bolt (10) and provided on its inner face with a web (25), the web (25) engaging in the groove (15) in the neck region (11), at least in some areas, and the wall thickness of the expansion sleeve (20) being increased locally by the web (25),
wherein the expansion sleeve (20) can be displaced along the bolt (10) from the neck region (11) to the expansion region (12) with radial widening of the expansion sleeve (20) and
wherein, when the expansion sleeve (20) is displaced from the neck region (11) to the expansion region (12), the web (25) reaches the expansion region (12), at least in some areas, and is forced radially outwards by the expansion region (12), **characterised in that**,
in the expansion region (12), the bolt (10) has a greater slope in the extension of the groove (15), at least in some areas, than offset relative to the groove (15) or that, in the expansion region (12), the bolt (10) has a smaller slope in the extension of the groove (15), at least in some areas, than offset relative to the groove (15).

2. Expansion anchor (1) according to claim 1,
**characterised in that**
the distance of the web (25) from the end face (21) of the expansion sleeve (20) directed towards the expansion region (12) is less than 10 times, 5 times or 2 times the height of the web (25).

3. Expansion anchor (1) according to one of the preceding claims,
**characterised in that**
the groove (15) provided in the neck region (11) of the bolt (10) extends as far as the expansion region (12) of the bolt (10).

4. Expansion anchor (1) according to one of the preceding claims,
**characterised in that**
the bolt (10) is provided in the neck region (11) with a plurality of grooves (15) extending along the bolt (10),
that the expansion sleeve (20) is provided on its inner face with a plurality of webs (25) by means of which the wall thickness of the expansion sleeve (20) is increased locally and which each engage in one of the grooves (15) in the neck region (11), at least in some areas, and
that, when the expansion sleeve (20) is displaced from the neck region (11) to the expansion region (12), several webs (25) reach the expansion region (12), at least in some areas, and are forced radially outwards by the expansion region (12).

5. Expansion anchor (1) according to one of the preceding claims,
**characterised in that**
the bolt (10) has a non-circular cross section in the expansion region (12), at least in some areas.

6. Expansion anchor (1) according to one of the preceding claims,
**characterised in that**
the bolt (10) has a rotationally symmetrical cross section in the neck region (11) and/or in the expansion region (12), at least in some areas.

7. Expansion anchor (1) according to one of the preceding claims,
**characterised in that**
the circumferential surface of the bolt (10) in the expansion region (12) continuously adjoins the circumferential surface of the bolt (10) in the neck region (11).

8. Expansion anchor (1) according to one of the preceding claims,
**characterised in that**
the web (25) is provided at its end directed towards the expansion region (12) with a chamfer (26).

9. Expansion anchor (1) according to one of the preceding claims,
**characterised in that**
the bolt (10) is provided in a depression, in particular in the groove (15), with an adhesive coating (19) that can be activated by the expansion sleeve (20), in particular by the web (25).

10. Manufacturing method in which an expansion anchor (1) according to one of the preceding claims is produced, in which
the bolt (10) of the expansion anchor (1) is formed from a first blank and
the expansion sleeve (20) of the expansion anchor (1) is formed from a second blank,
wherein the bolt (10) has the features of the bolt (10) or the expansion sleeve (20) has the features of the expansion sleeve (20) of the expansion anchor (1) according to one of the preceding claims.

11. Method according to claim 10,
**characterised in that**
the web (25) is formed on the inner face of the expansion sleeve (20) in a rolling process, wherein the axis of rotation of at least one forming roll used in the rolling process extends preferably parallel, at least at an angle of less than 45°, to the web (25).

12. Method according to claim 10 or claim 11,
**characterised in that**
a coating liquid is applied to the first blank after the forming of the groove (15) and the first blank is then set in rotation about its longitudinal axis so that the coating liquid accumulates outside the groove (15), where it hardens with a locally increased layer thickness.

13. Arrangement consisting of a substrate (5) with a hole and an expansion anchor (1) according to one of claims 1 to 9 arranged in the hole, wherein the expansion region (12) of the bolt (10) presses the expansion sleeve (20) against the wall of the hole at its web (25).

## Revendications

1. Ancrage expansible (1) comportant :
un boulon (10) comportant une zone de col (11) et une zone d'expansion (12) adjacente à la zone de col (11), dans lequel le boulon (10) s'amincit jusqu'à la zone de col (11), dans lequel le boulon (10) comporte, dans la zone de col (11), une rainure (15) qui s'étend le long du boulon (10),
et une douille d'expansion (20) entourant au moins partiellement le boulon (10) et comportant, sur son côté intérieur, une nervure (25), dans lequel la nervure (25) s'engage, au moins dans certaines zones, dans la rainure (15) dans la zone de col (11), et dans lequel l'épaisseur de paroi de la douille d'expansion (20) est augmentée localement par la nervure (25),
dans lequel la douille d'expansion (20) peut être déplacée de la zone de col (11) à la zone d'expansion (12) par l'élargissement radial de la douille d'expansion (20) le long du boulon (10),
dans lequel lors du déplacement de la douille d'expansion (20) de la zone de col (11) à la zone d'expansion (12), la nervure (25) pénètre, au moins dans certaines zones, dans la zone d'expansion (12) et est forcée radialement vers l'extérieur à partir de la zone d'expansion (12),
**caractérisé en ce que**
le boulon (10) a, dans la zone d'expansion (12) dans l'extension de la rainure (15), au moins dans certaines zones, une inclinaison plus grande que dans une zone décalée par rapport à la rainure (15), ou
**en ce que** le boulon (10) a, dans la zone d'expansion (12) dans l'extension de la rainure (15), au moins dans certaines zones, une inclinaison plus petite que dans une zone décalée par rapport à la rainure (15).

2. Ancrage expansible (1) selon la revendication 1,
**caractérisé en ce que**
la distance de la nervure (15) par rapport à la face frontale (21) de la douille d'expansion (20), qui est dirigée vers la zone d'expansion (12), est inférieure à 10 fois, 5 fois ou 2 fois la hauteur de la nervure (25) .

3. Ancrage expansible (1) selon l'une des revendications précédentes,
**caractérisé en ce que**
la rainure (15) prévue dans la zone de col (11) du boulon (10) atteint la zone d'expansion (12) du boulon (10) .

4. Ancrage expansible (1) selon l'une des revendications précédentes,
**caractérisé en ce que**
le boulon (10) comporte, dans la zone de col (11), une pluralité de rainures (15) qui s'étendent le long du boulon (10),
**en ce que** la douille d'expansion (20) comporte, sur son côté intérieur, une pluralité de nervures (25) au moyen desquelles l'épaisseur de paroi de la douille d'expansion (20) est respectivement augmentée localement et qui s'engagent respectivement, au moins dans certaines zones, dans l'une des rainures (15) dans la zone de col (11),
et **en ce que** plusieurs nervures (25) pénètrent, lors du déplacement de la douille d'expansion (20) de la zone de col (11) à la zone d'expansion (12), au moins dans certaines zones, dans la zone d'expansion (12) et sont forcées radialement vers l'extérieur à partir de la zone d'expansion (12).

5. Ancrage expansible (1) selon l'une des revendications précédentes,
**caractérisé en ce que**
le boulon (10) a, dans la zone d'expansion (12), au moins dans certaines zones, une section transversale non circulaire.

6. Ancrage expansible (1) selon l'une des revendications précédentes,
**caractérisé en ce que**
le boulon (10) a, dans la zone de col (11) et/ou dans la zone d'expansion (12), au moins dans certaines zones, une section transversale présentant une symétrie de rotation.

7. Ancrage expansible (1) selon l'une des revendications précédentes,
**caractérisé en ce que**
la surface extérieure du boulon (10) dans la zone d'expansion (12) est constamment adjacente à la surface extérieure du boulon (10) dans la zone de col (11).

8. Ancrage expansible (1) selon l'une des revendications précédentes,
**caractérisé en ce que**
la nervure (25) comporte un chanfrein (26) à son extrémité dirigée vers la zone d'expansion (12).

9. Ancrage expansible (1) selon l'une des revendications précédentes,
**caractérisé en ce que**
le boulon (10) comporte, dans un évidement, en particulier dans la rainure (15), un revêtement adhésif (19) qui peut être activé par la douille d'expansion (20), en particulier par la nervure (25).

10. Procédé de fabrication dans lequel est fabriqué un ancrage expansible (1) selon l'une des revendications précédentes, comportant les étapes consistant à :
former le boulon (10) de l'ancrage expansible (1) à partir d'une première ébauche, et
former la douille d'expansion (20) de l'ancrage expansible (1) à partir d'une seconde ébauche,
dans lequel le boulon (10) présente les caractéristiques du boulon (10) ou la douille d'expansion (20) présente les caractéristiques de la douille d'expansion (20) de l'ancrage expansible (1) selon l'une des revendications précédentes.

11. Procédé selon la revendication 10,
**caractérisé en ce que**
la nervure (25) est formée sur le côté intérieur de la douille d'expansion (20) pendant un procédé de roulage, dans lequel l'axe de rotation d'au moins un cylindre de formage utilisé pendant le procédé de roulage, s'étend de préférence parallèlement, au moins à un angle inférieur à 45° par rapport à la nervure (25).

12. Procédé selon la revendication 10 ou 11,
**caractérisé en ce que**
un liquide de revêtement est appliqué sur la première ébauche après le formage de la rainure (15), et la première ébauche est ensuite mise en rotation autour de son axe longitudinal de sorte que le liquide de revêtement s'accumule à l'extérieur de la rainure (15) et y durcit avec une épaisseur de couche localement augmentée.

13. Système constitué d'un substrat (5) avec un trou et d'un ancrage expansible (1) selon l'une des revendications 1 à 9 qui est agencé dans le trou, dans lequel la zone d'expansion (12) du boulon (10) presse la douille d'expansion (20) au niveau de sa nervure (25) contre la paroi du trou.
